# EUROPEAN PATENT SPECIFICATION

(11) **EP 2 159 529 B1**
(45) Date of publication and mention of the grant of the patent: **04.06.2014**
(21) Application number: 08105138.5
(22) Date of filing: 26.08.2008
(51) Int. Cl.: F41A 17/06, F41A 19/58, A01G 3/037

(54) **POWERED CUTTING TOOL**
ELEKTRISCHES SCHNEIDEWERKZEUG
OUTIL DE COUPE ÉLECTRIQUE

(43) Date of publication of application: 03.03.2010
(73) Proprietor: Robert Bosch GmbH, 70442 Stuttgart (DE)
(72) Inventor: Poole, Richard, Ipswich, Suffolk IP32 7LR (GB); Butcher, Nicholas, Ipswich, Suffolk IP3 0BB (GB)

(56) References cited:
- EP-A- 0 291 431
- DE-A1- 19 849 976
- US-A- 6 092 290

## Description

### FIELD OF THE INVENTION

The present invention relates to a powered cutting tool, such as a vegetation cutting tool, more particularly such as a pruning tool.

### BACKGROUND OF THE INVENTION

Pruning tools in the form of secateurs are well known for use in cutting plant stems and trees and shrub branches. There are three basic types of secateur: "anvil", which comprise a single blade that can be moved against a flat surface to cut a stem; "bypass", which usually comprise a pair of blades (often just one of the blades has a cutting surface) that are operated like a pair of scissors, and which provide a shearing force to cut the stem as the blades are moved passed each other; and "parrot-beak", which are also operable like a pair of scissors and which comprise a pair of concave blades, between which a stem can be trapped and cut.

Pruning tools may be manually operated or driven, usually by an electrical motor. For example, EP 803187 A2 describes a set of pruning shears which have two relatively adjustable cutting blades, one of which is secured to the housing of the shears, the other operated by an electric motor.

DE 19849976 A1 also describes a set of motor driven shears having a fixed blade and a moveable blade. The moveable blade is coupled swivellable with the fixed blade such that it can carry out a cutting operation in conjunction with the fixed blade. Movement of the blade is controlled by an electric motor which is coupled to a control unit and sensor to detect when the blade is at the predetermined extremes of operation.

Powered pruning tools usually include a 2-position switch which is readily actuatable by the user to cause the blades to move between open and closed positions. In such powered pruning tools, a secondary switch is typically provided to de-energise the tool so as to avoid the risk of the blades being actuated inadvertently.

This can take the form of an independent on/off switch located separately on the tool. For example, EP 0291431 A1 describes a portable electric tool, such as a pair of secateurs, that include a trigger which protrudes from the tool housing and operates an electric control device. The trigger and the electric control device are connected to a moving gear unit of a moving working component and follow the movements of the component. The trigger and the control device can occupy different relative positions, so that each movement made by the trigger from a neutral position causes activation of the control device, which in turn starts an electric motor to move the whole unit - wherein the whole unit comprises the moving gear unit, the trigger, and the control device - which then returns automatically to the neutral position at which the trigger is immobilized either by limit stops, or manually.

However, this kind of switch arrangement encourages the user to leave the tool in a 'switched-on' condition and so does not reliably prevent the tool from being inadvertently operated. This may also result in an undesirable drain on the power source.

Other switch mechanisms comprising a second finger switch are also known. For example, DE 19849976 A1 describes a pair of motor operated shears comprising two finger-operated switches. In this switch arrangement, the first switch is moveable between two positions to select blade motion towards closed or open positions. Simultaneous actuation of the second finger switch is necessary to enable the motor to operate.

However, these kind of switches can be inadvertently actuated simply when holding the tool in its normal operating position.

US 6, 092, 290 discloses a portable rescue tool having hydraulically-powered cutting blades. The operating switch has three positions, the electrical circuit being open in the first position so that no fluid is pumped.

Accordingly, the present invention seeks to overcome at least some of these disadvantages and provide a switch-operation mechanism which facilitates safer use of a powered cutting tool.

### SUMMARY OF THE INVENTION

According to the present invention there is provided a powered cutting tool as claimed in Claim 1.

Preferably, the lever is operatively-biased towards the first position by a first biasing means. Preferably, the first biasing means is a spring.

Optionally, the lever includes a second biasing means which is activated in response to the lever being moved, in use, between the second and third positions. Suitably, activation of the second biasing means increases a force required to operate the lever to between 15% and 60% greater than that required to overcome the first biasing means; preferably between 25% and 40% greater; more preferably about 30% greater. Preferably, the second biasing means is a spring.

Preferably, the switch-operating mechanism further comprises an interlock to lock the switch lever in the first position for storage.

Preferably, the switch-operating mechanism includes a switch lever guard.

Suitably, the switch-operating mechanism further comprises one or more lever-position-detection switches. Preferably, the lever-position-detection switches act to control the power supply to the working head.
Preferably, the power tool is a pruning tool. Suitably, the pruning tool is motor driven and comprises a body, motor unit and a cutting head operable by means of the switch-operating mechanism.

Preferably, the motor is a direct current motor.

Preferably, the power tool is battery-powered. Preferably, the battery is rechargeable; more preferably, the battery is a lithium-ion battery.

Preferably, the first cutter member is a moveable blade and the second cutter member comprises a fixed blade. Preferably, the fixed blade further comprises a vegetation guide.

Preferably, the lever provides a non-continuous activation of the motor, in use.

Suitably, the pruning tool further comprises one or more blade position-limit switches. At least one blade position-limit interrupts the supply of power to the motor when at least one moveable member of the working head has moved from a first position in which the first cutter member is in the first angular position with respect to the second cutter member, to a second position in which the first cutter member is in the second angular position with respect to the second cutter member, in use. Preferably, the one or more limit switches provide a short-circuit across the motor connections when the at least one cutter member has moved from first to second angular positions.

Optionally, the pruning tool further includes battery cell monitoring circuits. In preferred embodiments, control electronics for the motor and or limit switch operations also incorporate lithium-ion battery monitoring and controlling functions. For example, it may be desired to disable operation of the motor in the event that the battery becomes discharged below a pre-selected voltage or its temperature exceeds a predefined limit.

### BRIEF DESCRIPTION OF THE DRAWINGS

The above and other aspects of the present invention will now be illustrated in further detail, by way of example only, with reference to the accompanying drawings in which:
- Figure 1: is a perspective view of an embodiment of a tool in accordance with the invention;
   - Figure 2: is a side view of the embodiment of Figure 1;
   - Figure 3: is a perspective view of the principal components of the switch-operating mechanism of the embodiment of Figure 1, in which the switch lever is in a first position;
   - Figure 4: is a perspective view of the principal components of the switch-operating mechanism of the embodiment of Figure 1, in which the switch lever is in a second position; and
   - Figure 5: is a perspective view of the principal components of the switch-operating mechanism of the embodiment of Figure 1, in which the switch lever is in a third position.

### DETAILED DESCRIPTION OF THE INVENTION

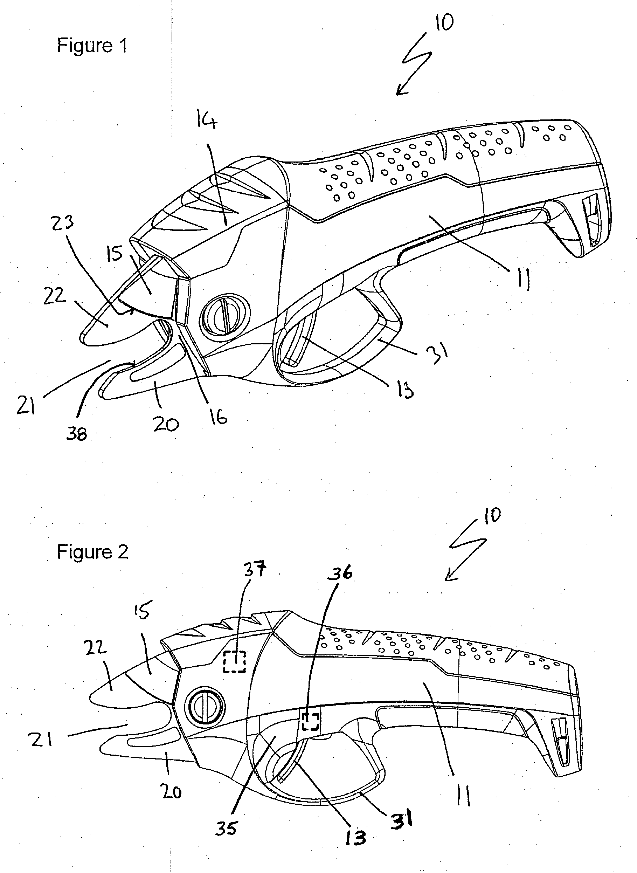

Referring to Figures 1 and 2, there is shown a pruning tool 10 generally of the bypass type and comprising an elongate handle 11, the handle including a user-control in the form of a switch lever 13. Handle 11 further includes a cutting head 14 located at a front end of handle 11, the cutting head 14 comprising a moveable blade 15 and a fixed cutting head element in the form of plate 16. Plate 16 comprises a fixed blade 20 with unsharpened leading edge 38 and a vegetation guide 22 forming a vegetation-receiving channel 21 therebetween. Handle 11 and cutting head 14 comprise portions of a tool housing 35 which houses a motor and a battery power source (not shown).

Moveable cutter member 15 includes a sharpened leading or cutting edge 23 and is pivotally drivable, in use, between retracted and extended positions by a motor. When the moveable cutter member 15 is in the retracted position, moveable and fixed cutter members 15,20 are operatively spaced, and the sharpened leading edge is retracted and protected by vegetation guide 22, and vegetation-receiving channel 21 is open.

In use, the action of driving moveable cutter member 15 towards the fixed cutter member 20 provides a shearing action therebetween in the manner of a bypass-type pruner. That shearing action can be used to cut any vegetation which has been located within the vegetation-receiving channel 21. In alternative embodiments, the action of driving the moveable cutter member 15 towards the fixed cutter member 20 provides a simple cutting force therebetween, in which a sharpened leading edge of the moveable cutter member 15 forces the article to be cut against the fixed cutter member 20 to thereby cut the article in the manner of an anvil-type pruner.

In the illustrated embodiment, the fixed cutter member 20 is not moveable. However, in alternative embodiments (not shown) second cutter member 20 is reciprocally drivable relative to the moveable cutter member 15.

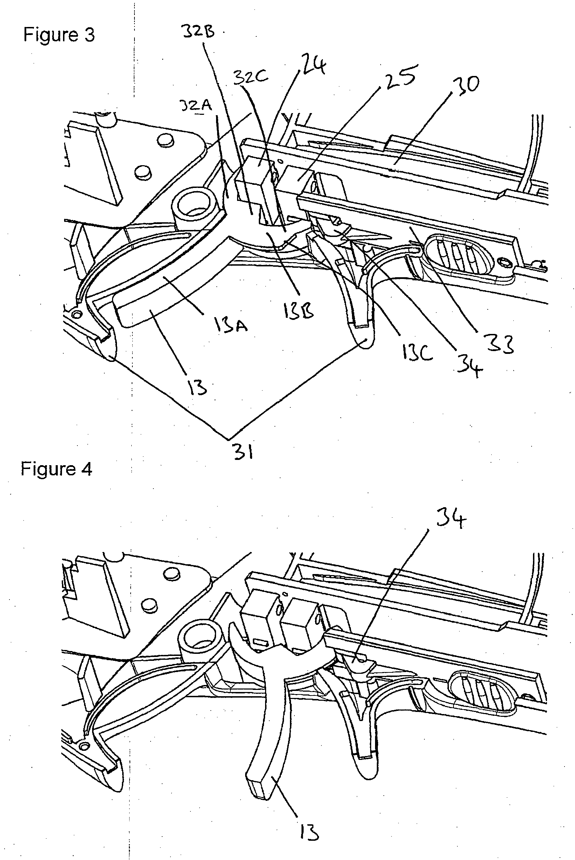

Referring now to Figures 3 to 5, there is shown the principal components of a switch-operating mechanism in which the upper half of the tool housing has been omitted for clarity. The switch-operating mechanism comprises a trigger or switch lever 13, lever-position-detection switches in the form of micro-switches 24,25, and a circuit board 30, upon which the micro-switches 24,25 are mounted.

Switch lever 13 comprises an elongate arm 13A and a hand 13B which includes three fingers 32A,32B,32C and is pivotably mounted within the pruning tool housing. As will be described in more detail below, in the assembled mechanism, finger 32B operatively engages with micro-switches 24,25 to determine in which of three operating positions A,B,C is switch lever 13.

In the illustrated embodiment, the pruning tool also includes a lever guard 31 which acts to shield the switch lever 13 from inadvertent activation. In particular, the lever guard 31 acts to prevent branches from engaging with the switch lever or the fingers of a user's hand to inadvertently affect operation of the pruning tool. In Figures 3 to 5 a portion of the continuous guard has been omitted for clarity.

In Figure 3, the switch lever 13 is in position 'A', and is sprung-loaded by a first biasing means in the form of a torsion spring 36 (shown schematically in Figure 2) against the housing of the tool. Accordingly, and as shown in Figures 1 to 3, access to the switch lever 13, and thus its normal operation, is restricted to prevent the inadvertent activation of the pruning tool. In this condition, a first face of the lever finger 32B is in contact with microswitch 24 which results in the de-energisation of all electrical circuits within the tool (including cell condition monitoring etc.). The tool can therefore be left unattended for long periods when not in use without loss of battery charge.

Also shown is a slidable manual lock 33. The slidable lock 33 is slidably moveable between disengaged and engaged positions, and when in an engaged position, as shown in Figure 3, the lock mechanically prevents the movement of the switch lever 13 from position A. This provides an additional security against unintended operation.

Figure 4 shows the switch lever 13 in position 'B'. In operation of the switch lever 13, a user's finger has rotated the switch lever 13 away from the housing by levering against its sidefaces whilst overcoming the preload provided by the spring 36. In rotating the lever switch to position B, contact between microswitch 24 and finger 32B is lost. This has the effect of simultaneously energising all of the battery cell condition monitoring circuits and energising the motor to drive the moveable blade 15 of the cutting head 14 to the retracted position (if it were not already in the retracted position).

The pruning tool also includes blade position detecting limit switches 37 (shown schematically in Figure 2) to stop the motor drive when the moveable blade is in the correct fully retracted position.

In addition, battery cell monitoring circuits are required when lithium-ion cells are used. The switch-operating mechanism optionally also includes battery cell monitoring circuits. In preferred embodiments, control electronics for the motor and or limit switch operations also incorporate lithium-ion battery monitoring and controlling functions. For example, it may be desired to disable operation of the motor in the event that the battery becomes discharged below a pre-selected voltage or its temperature exceeds a predefined limit.

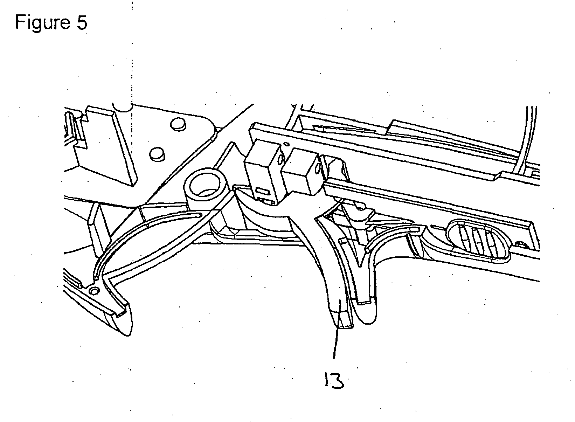

Figure 5 shows switch lever 13 in position 'C'. In further operation of the switch lever 13, a user's finger has rotated the switch lever 13 in the manner of a trigger action to position C. In rotating the lever switch to position C, the loss of contact between microswitch 24 and the first face of finger 32B is maintained, whilst contact between a second face of finger 32B and microswitch 25 is made. This has the effect of maintaining the battery cell condition monitoring circuits in an energised state and energises the motor to drive the moveable blade 15 of the cutting head 14 to the extended position, in which moveable blade traverses vegetation-receiving channel 21. Also when in position 'C', finger 32A protects microswitch 24 from direct contact with the user.

The switch mechanism preferably includes a further indication means to notify the user that switch lever 13 is approaching position C. The indication means will preferably provide indications of a tactile nature. For example, the indication means will lead to an additional increase in resistance to the rotation of switch lever 13. The indication means comprises a ramp 13C, located on the switch lever 13 which cooperates with a flexible member 34 formed integrally with the slidable manual lock 33. This flexible member 34 comprises a second biasing means which is activated in response to the switch lever being moved, in use, between position B and position C. It is possible that the second biasing means is engaged as soon as the switch lever 13 is in position B, or more preferably, at an intermediate position between position B and position C (i.e., nearer to the end of the triggering stroke).

Activation of the second biasing means increases a force required to operate the switch lever 13 to between 15% and 60% greater than that required to overcome the first biasing means; preferably between 25% and 40% greater; more preferably about 30% greater.

Moveable blade 15 will remain in the extended position for as long as switch lever 13 is maintained in position C. However, once the switch lever 13 is returned to position B, the moveable blade moves to the retracted position. A particular advantage of this arrangement is the ease with which a series of cuts can be made by simple one-finger movement once the distinct action of moving the switch lever 13 from position A to position B has been completed once only. After use the lever is returned to position A from position B for tool shutdown and storage. The movable blade 15 will therefore be in the retracted position for storage of the tool.

## Claims

1. A powered cutting tool comprising a working head (14) having first and second cutter members having respective cutter surfaces (23,38), wherein the first cutter member (15) is pivotably mounted with respect to the second cutter member (20), and wherein at least the first cutter member (15) is moveable from a retracted position with respect to the second cutter member (20), in which a space is formed between the respective cutter surfaces (23,38), to an extended position with respect to the second cutter member, in which the space between the respective cutter surfaces (23,38) is closed; and further comprising a switch-operating mechanism comprising a lever (13) moveable between first, second and third operative positions, wherein:
i) positioning of the lever (13) in the first operative position provides a 'power off mode' in which the power supply is disconnected;
ii) positioning of the lever (13) in the second operative position causes the cutter members (15,20) to move to said retracted position if not already in the retracted position; and
iii) positioning of the lever (13) in the third operative position causes the cutter members (15,20) to move to said extended position,
the powered tool being **characterised in that** the lever (13), when in the first operative position, abuts longitudinally against a housing (35) of the cutting tool whereby normal operation of the lever (13) is restricted to prevent the inadvertent activation of the cutting tool.

2. A powered cutting tool as claimed in claim 1, wherein the lever (13) is operatively-biased towards the first position by a first biasing means (36).

3. A powered cutting tool as claimed in any one of the preceding claims, wherein a second biasing means (34) is activated in response to the lever (13) being moved, in use, between the second and third positions.

4. A powered cutting tool as claimed in claim 3, wherein activation of the second biasing means (34) increases a force required to operate the lever (13) to between 15% and 60% greater than that required to overcome the first biasing means; preferably between 25% and 40% greater; more preferably about 30% greater.

5. A powered cutting tool as claimed in any one of the preceding claims, wherein the switch-operating mechanism further comprises an interlock (33) to lock the lever (13) in the first position for storage.

6. A powered cutting tool as claimed in any one of the preceding claims, wherein the switch-operating mechanism includes a lever guard (31).

7. A powered cutting tool as claimed in any one of the preceding claims, wherein the switch-operating mechanism further comprises one or more lever-position-detection switches (24,25).

8. A powered cutting tool as claimed in claim 7, wherein, the lever-position-detection switches (24,25) act to control the power supply to the working head (14).

9. A powered cutting tool as claimed in any preceding claim, wherein the power tool is of the type having a non-continuous demand for power.

10. A powered cutting tool as claimed in any preceding wherein the power tool is a pruning tool.

11. A powered cutting tool as claimed in any preceding claim, wherein the power tool further comprises one or more blade position-limit switches.

12. A powered cutting tool as claimed in claim 11, wherein at least one blade position-limit interrupts the supply of power to the motor when at least one moveable member (15) of the working head (14) has moved from a first position in which the first cutter member (15) is in the first cutter position with respect to the second cutter member (20), to a second position in which the first cutter member (15) is in the second cutter position with respect to the second cutter member (20).

## Patentansprüche

1. Angetriebenes Schneidwerkzeug, das einen Arbeitskopf (14) mit einem ersten und einem zweiten Schneidelement mit jeweiligen Schneidoberflächen (23, 38) umfasst, wobei das erste Schneidelement (15) im Verhältnis zum zweiten Schneidelement (20) schwenkbar montiert ist, und wobei mindestens das erste Schneidelement (15) aus einer eingefahrenen Position im Verhältnis zum zweiten Schneidelement (20), in der ein Raum zwischen den jeweiligen Schneidoberflächen (23, 38) gebildet ist, zu einer ausgefahrenen Position im Verhältnis zum zweiten Schneidelement, in der der Raum zwischen den jeweiligen Schneidoberflächen (23, 38) geschlossen ist, bewegbar ist; und das weiterhin einen Betriebsartenmechanismus umfasst, der einen zwischen einer ersten, einer zweiten und einer dritten Betriebsposition bewegbaren Hebel (13) umfasst, wobei:
i) das Positionieren des Hebels (13) in der ersten Betriebsposition einen "Stromlosmodus" bereitstellt, in dem die Stromversorgung ausgeschaltet ist;
ii) das Positionieren des Hebels (13) in der zweiten Betriebsposition bewirkt, dass sich die Schneidelemente (15, 20) zur eingefahrenen Position bewegen, wenn sie sich nicht schon in der eingefahrenen Position befinden; und
iii) das Positionieren des Hebels (13) in der dritten Betriebsposition bewirkt, dass sich die Schneidelemente (15, 20) zur ausgefahrenen Position bewegen,
wobei das angetriebene Werkzeug **dadurch gekennzeichnet ist, dass** der Hebel (13), wenn er sich in der ersten Betriebsposition befindet, in Längsrichtung an ein Gehäuse (35) des Schneidwerkzeugs anstößt, wobei die Normalstellung des Hebels (13) darauf beschränkt ist, die unbeabsichtigte Aktivierung des Schneidwerkzeugs zu verhindern.

2. Angetriebenes Schneidwerkzeug nach Anspruch 1, bei dem der Hebel (13) durch ein erstes Vorspannmittel (36) hin zur ersten Position betriebswirksam vorgespannt ist.

3. Angetriebenes Schneidwerkzeug nach einem der vorstehend aufgeführten Ansprüche, bei dem ein zweites Vorspannmittel (34) in Reaktion auf den Hebel (13) aktiviert wird, wenn dieser im Gebrauch zwischen den zweiten und dritten Positionen bewegt wird.

4. Angetriebenes Schneidwerkzeug nach Anspruch 3, bei dem durch Aktivieren des zweiten Vorspannmittels (34) eine Kraft erhöht wird, die erforderlich ist, um den Hebel (13) mit einer Kraft zu betätigen, die 15% bis 60% über derjenigen liegt, die erforderlich ist, um das erste Vorspannmittel zu überwinden, und die vorzugsweise 25% bis 40% oder besonders bevorzugt etwa 30% höher als diese ist.

5. Angetriebenes Schneidwerkzeug nach einem der vorstehend aufgeführten Ansprüche, bei dem der Betriebsartenmechanismus weiterhin eine Verriegelung (33) umfasst, um den Hebel (13) in der ersten Position zur Lagerung zu verriegeln.

6. Angetriebenes Schneidwerkzeug nach einem der vorstehend aufgeführten Ansprüche, bei dem der Betriebsartenmechanismus einen Hebelschutz (31) beinhaltet.

7. Angetriebenes Schneidwerkzeug nach einem der vorstehend aufgeführten Ansprüche, bei dem der Betriebsartenmechanismus weiterhin einen oder mehrere Hebelpositionsermittlungsschalter (24, 25) umfasst.

8. Angetriebenes Schneidwerkzeug nach Anspruch 7, bei dem die Hebelpositionsermittlungsschalter (24, 25) dazu dienen, die Stromversorgung zum Arbeitskopf (14) zu kontrollieren.

9. Angetriebenes Schneidwerkzeug nach einem der vorstehend aufgeführten Ansprüche, wobei das angetriebene Schneidwerkzeug für einen diskontinuierlichen Strombedarf ausgelegt ist.

10. Angetriebenes Schneidwerkzeug nach einem der vorstehend aufgeführten Ansprüche, wobei das angetriebene Schneidwerkzeug ein Gehölzschnittwerkzeug ist.

11. Angetriebenes Schneidwerkzeug nach einem der vorstehend aufgeführten Ansprüche, wobei das angetriebene Schneidwerkzeug weiterhin einen oder mehrere Klingenpositionsgrenzschalter umfasst.

12. Angetriebenes Schneidwerkzeug nach Anspruch 11, bei dem mindestens ein Klingenpositionsgrenzschalter die Stromzufuhr zum Motor unterbricht, wenn sich mindestens ein bewegbares Element (15) des Arbeitskopfes (14) von einer ersten Position, in der sich das erste Schneidelement (15) in der ersten Schneidposition im Verhältnis zum zweiten Schneidelement (20) befindet, zu einer zweiten Position bewegt hat, in der sich das erste Schneidelement (15) in der zweiten Schneidposition im Verhältnis zum zweiten Schneidelement (20) befindet.

## Revendications

1. Outil de coupe électrique comprenant une tête de travail (14) ayant des premier et deuxième organes de couteau ayant des surfaces de couteau respectives (23, 38), le premier organe de couteau (15) étant monté de manière pivotante par rapport au deuxième organe de couteau (20), et au moins le premier organe de couteau (15) pouvant être déplacé d'une position rentrée par rapport au deuxième organe de couteau (20), dans laquelle un espace est formé entre les surfaces de couteau respectives (23, 38), dans une position sortie par rapport au deuxième organe de couteau, l'espace entre les surfaces de couteau respectives (23, 38) étant fermé ; et comprenant en outre un mécanisme de commande de commutateur comprenant un levier (13) pouvant être déplacé entre une première, une deuxième et une troisième position fonctionnelle,
i) le positionnement du levier (13) dans la première position fonctionnelle commutant à un "mode déconnecté" dans lequel l'alimentation électrique est déconnectée ;
ii) le positionnement du levier (13) dans la deuxième position fonctionnelle provoquant le déplacement des organes de couteau (15, 20) dans ladite position rentrée s'ils ne sont pas déjà dans la position rentrée ; et
iii) le positionnement du levier (13) dans la troisième position fonctionnelle provoquant le déplacement des organes de couteau (15, 20) dans ladite position sortie,
l'outil électrique étant **caractérisé en ce que** le levier (13), lorsqu'il est dans la première position fonctionnelle, bute longitudinalement contre un boîtier (35) de l'outil de coupe, le fonctionnement normal du levier (13) étant restreint pour empêcher l'activation accidentelle de l'outil de coupe.

2. Outil de coupe électrique selon la revendication 1, dans lequel le levier (13) est précontraint fonctionnellement vers la première position par un premier moyen de précontrainte (36).

3. Outil de coupe électrique selon l'une quelconque des revendications précédentes, dans lequel un deuxième moyen de précontrainte (34) est activé en réponse au déplacement du levier (13), pendant l'utilisation, entre les deuxième et troisième positions.

4. Outil de coupe électrique selon la revendication 3, dans lequel l'activation du deuxième moyen de précontrainte (34) augmente une force requise pour faire fonctionner le levier (13) jusqu'à ce qu'elle soit supérieure de 15 % à 60 % à celle requise pour surmonter la force du premier moyen de précontrainte ; de préférence supérieure de 25 % à 40 % ; plus préférablement supérieure d'environ 30 %.

5. Outil de coupe électrique selon l'une quelconque des revendications précédentes, dans lequel le mécanisme de commande de commutateur comprend en outre un verrouillage (33) pour verrouiller le levier (13) dans la première position en vue du stockage.

6. Outil de coupe électrique selon l'une quelconque des revendications précédentes, dans lequel le mécanisme de commande de commutateur comprend un protège-levier (31).

7. Outil de coupe électrique selon l'une quelconque des revendications précédentes, dans lequel le mécanisme de commande de commutateur comprend en outre un ou plusieurs commutateurs de détection de position du levier (24, 25).

8. Outil de coupe électrique selon la revendication 7, dans lequel les commutateurs de détection de position du levier (24, 25) agissent de manière à commander l'alimentation électrique à la tête de travail (14).

9. Outil de coupe électrique selon l'une quelconque des revendications précédentes, dans lequel l'outil électrique est du type ayant une demande non continue en alimentation électrique.

10. Outil de coupe électrique selon l'une quelconque des revendications précédentes, dans lequel l'outil électrique est un outil de taille.

11. Outil de coupe électrique selon l'une quelconque des revendications précédentes, dans lequel l'outil électrique comprend en outre un ou plusieurs commutateurs de position de fin de course des lames.

12. Outil de coupe électrique selon la revendication 11, dans lequel au moins une position de fin de course de lame interrompt l'alimentation en puissance au moteur lorsqu'au moins un organe déplaçable (15) de la tête de travail (14) s'est déplacé d'une première position, dans laquelle le premier organe de couteau (15) est dans la première position de couteau par rapport au deuxième organe de couteau (20), dans une deuxième position dans laquelle le premier organe de couteau (15) est dans la deuxième position de couteau par rapport au deuxième organe de couteau (20).
